# EUROPEAN PATENT APPLICATION

(11) **EP 4 615 052 A1**
(43) Date of publication of application: **10.09.2025**
(21) Application number: 23884651.3
(22) Date of filing: 24.10.2023
(51) Int. Cl.: H04W 36/00

(54) **DATA TRANSMISSION METHOD, AND APPARATUS**

(30) Priority: 03.11.2022 CN 202211371302
(71) Applicant: HUAWEI TECHNOLOGIES CO., LTD., Shenzhen, Guangdong 518129 (CN)
(72) Inventor: YOU, Chunhua, Shenzhen, Guangdong 518129 (CN); ZHANG, Hongzhuo, Shenzhen, Guangdong 518129 (CN)
(74) Representative: Pfenning, Meinig & Partner mbB
(86) International application number: PCT/CN2023/126128
(87) International publication number: WO 2024/093719

(57) **Abstract**

Embodiments of this application provide a data transmission method and apparatus. The method includes: A first network device and a second network device exchange information by using first request information and first response information. The first request information includes a first uplink general packet radio service tunneling protocol tunnel endpoint identifier UL GTP TEID and identification information of at least one candidate cell corresponding to the first UL GTP TEID, and the first response information includes a first downlink DL GTP TEID and configuration information of the at least one candidate cell corresponding to the first DL GTP TEID. The first network device sends a switch command to a terminal device based on a measurement report of the at least one candidate cell. The first network device determines the switch command based on the measurement report, but does not need to send the measurement report to the second network device, for the second network device to determine the switch command. Therefore, switch duration is reduced, and user experience is improved.

## Description

This application claims priority to Chinese Patent Application No. 202211371302.0, filed with the China National Intellectual Property Administration on November 3, 2022 and entitled "DATA TRANSMISSION METHOD AND APPARATUS", which is incorporated herein by reference in its entirety.

### TECHNICAL FIELD

Embodiments of this application relate to the field of communication technologies, and more specifically, to a data transmission method and apparatus.

### BACKGROUND

Cell switch is a very important feature in a 5G system, and is usually triggered by movement of a terminal device in a radio resource control (radio resource control, RRC) connected state. A basic objective of the switch is to hand over the terminal device to a neighboring cell with good signal quality before signal quality of a serving cell of the terminal device becomes unavailable for communication, to provide a continuous uninterrupted communication service for the terminal device, and effectively prevent a communication call drop of the terminal device caused by poor signal quality of the serving cell.

In a conventional technology, in L3 switch, a central unit (central unit, CU) responsible for non-real-time processing determines, based on a measurement result of a terminal device on signal quality of a serving cell, whether to indicate the terminal device to initiate cell switch. The measurement result is sent by the terminal device to a distributed unit (distributed unit, DU) responsible for high real-time processing, and then sent by the DU to the CU through an F1 interface. When the signal quality of the serving cell of the terminal device is poor, the CU sends a switch command to the DU, the DU forwards the switch command to the terminal device, and the terminal device performs cell switch based on the switch command. It can be learned that, in a process of transmitting switch-related information, information exchanged between the CU and the DU needs to be transmitted through the F1 interface, and consequently a specific switch delay exists.

Therefore, a method that can be used for reducing a switch delay to improve user experience is urgently needed.

### SUMMARY

Embodiments of this application provide a data transmission method and apparatus, to reduce a delay in a switch process and further improve user experience.

According to a first aspect, a data transmission method is provided. The method includes: A first network device receives a first request message from a second network device, where the first request message includes a first uplink general packet radio service tunneling protocol tunnel endpoint identifier UL GTP TEID and identification information of at least one candidate cell corresponding to the first UL GTP TEID. The first network device sends a first response message to the second network device based on the first request message, where the first response message includes a first downlink general packet radio service tunneling protocol tunnel endpoint identifier DL GTP TEID and configuration information of the at least one candidate cell corresponding to the first DL GTP TEID. The first network device receives a first message from the second network device, where the first message includes the configuration information of the at least one candidate cell. The first network device sends the first message to a terminal device. The first network device sends a switch command to the terminal device based on a measurement report of a first cell, where the switch command instructs the terminal device to switch to the first cell, and the first cell belongs to the at least one candidate cell. The first network device sends first data to the second network device by using the first UL GTP TEID, where the first data is from the terminal device.

It should be understood that the first UL GTP TEID and the first DL GTP TEID are data forwarding tunnels established by the first network device and the second network device for the terminal device when or before the terminal device accesses the first cell. The data forwarding tunnels are used to transmit related data of the terminal device in the first cell between the first network device and the second network device.

According to the technical method provided in this application, the first network device sends the first message to the terminal device, where the first message is from the second network device, and the first message includes the configuration information of the at least one candidate cell. The terminal device determines the measurement report based on the first message. The first network device determines, based on the measurement report of the terminal device, that the switch command instructs the terminal device to switch to the first cell, where the at least one candidate cell includes the first cell. The first network device directly determines the switch command based on the measurement report, but does not need to send the measurement report to the second network device, for the second network device to determine the switch command based on the measurement report. Therefore, a delay in a switch process of the terminal device is reduced, and user experience is improved.

With reference to the first aspect, in some implementations of the first aspect, before the first network device sends the first data to the second network device by using the first UL GTP TEID, the method further includes: The first network device determines that the terminal device successfully accesses the first cell.

With reference to the first aspect, in some implementations of the first aspect, the first network device sends access success indication information to the second network device, where the access success indication information indicates that the terminal device successfully accesses the first cell.

With reference to the first aspect, in some implementations of the first aspect, after the first network device determines that the terminal device successfully accesses the first cell, the method further includes: The first network device receives second data from the second network device by using the first DL GTP TEID.

It should be understood that the second data is received by the first network device from the second network device by using the first DL GTP TEID, and after receiving the second data, the first network device sends the second data to the terminal device.

With reference to the first aspect, in some implementations of the first aspect, the first request message includes first indication information, the first indication information indicates to release or retain a GTP TEID, and the GTP TEID includes a UL GTP TEID and/or a DL GTP TEID.

With reference to the first aspect, in some implementations of the first aspect, after the terminal device successfully switches to the first cell, the method further includes: The first network device releases or retains a second UL GTP TEID and/or a second DL GTP TEID based on the first indication information, where the second UL GTP TEID and the second DL GTP TEID correspond to a second cell, the second cell is a source cell present before the terminal device switches to the first cell, the GTP TEID includes the second UL GTP TEID and the second DL GTP TEID, the second UL GTP TEID is different from the first UL GTP TEID, and the second DL GTP TEID is different from the first DL GTP TEID.

Based on the foregoing technical solution, the first network device determines, based on the first indication information, to release or retain the second UL GTP TEID and/or the second DL GTP TEID. When the first indication information indicates to retain the second UL GTP TEID and/or the second DL GTP TEID, the terminal device switches from another cell (for example, the first cell) to the second cell, and the first network device may continue to use the second UL GTP TEID and/or the second DL GTP TEID. When the first indication information indicates to release the second UL GTP TEID and/or the second DL GTP TEID, the first network device may provide the second UL GTP TEID and/or the second DL GTP TEID for another terminal device for use, to avoid a resource waste.

With reference to the first aspect, in some implementations of the first aspect, when the first indication information indicates to release the second UL GTP TEID and/or the second DL GTP TEID, that the first network device releases a second UL GTP TEID and/or a second DL GTP TEID based on the first indication information includes: The first network device releases the second DL GTP TEID and/or the second UL GTP TEID based on the first indication information and second indication information, where the second indication information indicates that forwarding of data transmitted by using the second DL GTP TEID ends.

For example, when data #1 in the data transmitted by using the second DL GTP TEID is a last data packet in the transmitted data, that is, when forwarding of the data #1 is completed, it indicates that forwarding of the data transmitted by using the second DL GTP TEID ends.

Based on the foregoing technical solution, the first network device determines, based on the first indication information and the second indication information, to release the second UL GTP TEID and/or the second DL GTP TEID, where the second indication information indicates that forwarding of the data transmitted by using the second DL GTP TEID ends; and the first network device determines, based on the second indication information, specific time for releasing the second DL GTP TEID.

With reference to the first aspect, in some implementations of the first aspect, the first request message further includes a cell global identifier CGI of the first cell and/or configuration information of the second network device, and the configuration information of the second network device includes packet data convergence protocol PDCP configuration information.

According to a second aspect, a data transmission method is provided. The method includes: A second network device sends a first request message to a first network device, where the first request message includes a first uplink general packet radio service tunneling protocol tunnel endpoint identifier UL GTP TEID and identification information of at least one candidate cell corresponding to the first UL GTP TEID. The second network device receives a first response message from the first network device, where the first response message includes a first downlink general packet radio service tunneling protocol tunnel endpoint identifier DL GTP TEID and configuration information of the at least one candidate cell corresponding to the first DL GTP TEID. The second network device sends a first message to the first network device, where the first message includes the configuration information of the at least one candidate cell. The second network device receives first data from the first network device by using the first UL GTP TEID, where the first data is from a terminal device.

With reference to the second aspect, in some implementations of the second aspect, the second network device receives access success indication information of the first network device, where the access success indication information indicates that the terminal device successfully accesses a first cell, and the first cell belongs to the at least one candidate cell.

With reference to the second aspect, in some implementations of the second aspect, after the first network device determines that the terminal device successfully accesses the first cell, the method further includes: The second network device sends second data to the first network device by using the first DL GTP TEID.

It should be understood that the second data is sent by the second network device to the first network device by using the first DL GTP TEID, and then the first network device sends the second data to the terminal device.

With reference to the second aspect, in some implementations of the second aspect, the first request message includes first indication information, the first indication information indicates to release or retain a GTP TEID, and the GTP TEID includes a UL GTP TEID and/or a DL GTP TEID.

With reference to the second aspect, in some implementations of the second aspect, after the terminal device successfully switches to the first cell, the method further includes: The second network device releases or retains a second UL GTP TEID and/or a second DL GTP TEID based on the first indication information, where the second UL GTP TEID and the second DL GTP TEID correspond to a second cell, the second cell is a source cell present before the terminal device switches to the first cell, the GTP TEID includes the second UL GTP TEID and the second DL GTP TEID, the second UL GTP TEID is different from the first UL GTP TEID, and the second DL GTP TEID is different from the first DL GTP TEID.

Based on the foregoing technical solution, the second network device determines, based on the first indication information, to release or retain the second UL GTP TEID and/or the second DL GTP TEID. When the first indication information indicates to retain the second UL GTP TEID and/or the second DL GTP TEID, the terminal device switches from another cell (for example, the first cell) to the second cell, and the second network device may directly use the second UL GTP TEID and/or the second DL GTP TEID. When the first indication information indicates to release the second UL GTP TEID and/or the second DL GTP TEID, the second network device may provide the second UL GTP TEID and/or the second DL GTP TEID for another terminal device for use, to avoid a resource waste.

With reference to the second aspect, in some implementations of the second aspect, when the first indication information indicates to release the second UL GTP TEID and/or the second DL GTP TEID, that the second network device releases a second UL GTP TEID and/or a second DL GTP TEID based on the first indication information includes: The second network device releases the second DL GTP TEID and/or the second UL GTP TEID based on the first indication information and second indication information, where the second indication information indicates that forwarding of data transmitted by using the second UL GTP TEID ends.

For example, when data #2 in the data transmitted by using the second UL GTP TEID is a last data packet in the transmitted data, that is, when forwarding of the data #2 is completed, it indicates that forwarding of the data transmitted by using the second UL GTP TEID ends.

Based on the foregoing technical solution, the second network device determines, based on the first indication information and the second indication information, to release the second UL GTP TEID and/or the second DL GTP TEID, where the second indication information indicates a last data packet of the second data or third data transmitted by using the second UL GTP TEID or the second DL GTP TEID; and the second network device determines, based on the second indication information, specific time for releasing the second DL GTP TEID.

With reference to the second aspect, in some implementations of the second aspect, the first request message further includes a cell global identifier CGI of the first cell and/or configuration information of the second network device, and the configuration information of the second network device includes packet data convergence protocol PDCP configuration information.

According to a third aspect, a data transmission method is provided. The method includes:

A first network device determines reference configuration information of lower layer mobility LTM.

The first network device sends a first request message to a second network device, where the first request message includes the reference configuration information and identification information of at least one candidate cell of the LTM.

The first network device receives a first response message from the second network device, where the first response message includes a delta (delta) configuration of the at least one candidate cell, and the delta configuration of the at least one candidate cell is a delta (delta) configuration that is based on the reference configuration information.

The first network device sends first information to a third network device, where the first information includes the delta configuration of the at least one candidate cell, and the first information is used to determine a reference configuration of the delta configuration.

Based on the foregoing technical solution, the first network device sends the determined reference configuration information of the LTM to the second network device by using the first request message. The second network device determines the delta configuration of the at least one candidate cell of the LTM based on the reference configuration information, and sends the delta configuration to the first network device. The first network device sends the delta configuration received from the second network device to the third network device. The delta configuration is used by a terminal device to determine the reference configuration of the delta configuration. The first network device, the second network device, and the third network device exchange information to negotiate a configuration, to determine the delta configuration, thereby reducing air interface signaling overheads and saving resources.

With reference to the third aspect, in some implementations of the third aspect, the first network device sends the reference configuration information to the terminal device.

With reference to the third aspect, in some implementations of the third aspect, the first information further includes identification information of a reference configuration of a candidate cell of the LTM.

With reference to the third aspect, in some implementations of the third aspect, the first information further includes the reference configuration information.

According to a fourth aspect, a data transmission method is provided. The method includes:

A second network device receives a first request message from a first network device, where the first request message includes reference configuration information of lower layer mobility LTM and identification information of at least one candidate cell of the LTM.

The second network device sends a first response message to the first network device based on the first request message, where the first response message includes a delta (delta) configuration of the at least one candidate cell, and the delta (delta) configuration of the at least one candidate cell is a delta (delta) configuration that is based on the reference configuration information.

According to a fifth aspect, a data transmission method is provided. The method includes:

A third network device (source DU) receives first information from a first network device (CU), where the first information includes a delta configuration of at least one candidate cell of a lower layer mobility LTM.

The third network device sends the first information to a terminal device.

The third network device receives a measurement report from the terminal device, where the measurement report is related to the first information.

The third network device sends a switch command to the terminal device based on the measurement report, where the switch command instructs the terminal device to switch to a first cell, and the first cell belongs to the at least one candidate cell.

With reference to the fifth aspect, in some implementations of the fifth aspect, the first information further includes identification information of a reference configuration of a candidate cell of the LTM.

With reference to the fifth aspect, in some implementations of the fifth aspect, the first information further includes reference configuration information.

According to a sixth aspect, a data transmission method is provided. The method includes:

A terminal device receives first information from a third network device (source DU), where the first information includes a delta configuration of at least one candidate cell of a lower layer mobility LTM.

The terminal device determines a measurement report based on the first information.

The terminal device sends the measurement report to the third network device.

The terminal device receives a switch command from the third network device, where the switch command instructs the terminal device to switch to a first cell, and the first cell belongs to the at least one candidate cell.

With reference to the sixth aspect, in some implementations of the sixth aspect, the first information further includes identification information of a reference configuration or reference configuration information.

With reference to the sixth aspect, in some implementations of the sixth aspect, the terminal device determines configuration information of the delta configuration based on the first information.

With reference to the sixth aspect, in some implementations of the sixth aspect, when the first information includes the identification information of the reference configuration, the method further includes:

The terminal device receives the reference configuration information of the LTM from a first network device.

According to a seventh aspect, a data transmission apparatus is provided. The apparatus includes each unit or module configured to perform the method according to any one of the first aspect to the sixth aspect and the possible implementations of the first aspect to the sixth aspect, for example, a processing unit and/or a communication unit.

For example, the communication unit is configured to receive a first request message from a second network device, where the first request message includes a first uplink general packet radio service tunneling protocol tunnel endpoint identifier UL GTP TEID and identification information of at least one candidate cell corresponding to the first UL GTP TEID. The processing unit is configured to send a first response message to the second network device based on the first request message, where the first response message includes a first downlink general packet radio service tunneling protocol tunnel endpoint identifier DL GTP TEID and configuration information of the at least one candidate cell corresponding to the first DL GTP TEID. The communication unit is further configured to receive a first message from the second network device, where the first message includes the configuration information of the at least one candidate cell. The communication unit is further configured to send the first message to a terminal device. The processing unit is further configured to send a switch command to the terminal device based on a measurement report of a first cell, where the switch command instructs the terminal device to switch to the first cell, and the first cell belongs to the at least one candidate cell. The communication unit is further configured to send first data to the second network device by using the first UL GTP TEID, where the first data is from the terminal device.

For another example, the processing unit is configured to determine reference configuration information of lower layer mobility LTM. The communication unit is configured to send a first request message to a second network device, where the first request message includes the reference configuration information and identification information of at least one candidate cell of the LTM. The communication unit is further configured to receive a first response message from the second network device, where the first response message includes a delta (delta) configuration of the at least one candidate cell, the delta configuration of the at least one candidate cell is a delta (delta) configuration that is based on the reference configuration information. The communication unit is further configured to send first information to a third network device, where the first information includes the delta configuration of the at least one candidate cell, and the first information is used to determine a reference configuration of the delta configuration.

In an implementation, the apparatus is a communication device. When the apparatus is a communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a communication device, the communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to an eighth aspect, a data transmission apparatus is provided. The apparatus includes at least one processor, configured to execute a computer program or instructions stored in a memory, to perform the method according to any one of the possible implementations of the first aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device.

In another implementation, the apparatus is a chip, a chip system, or a circuit used in a device.

According to a ninth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method according to any one of the possible implementations of the first aspect to the sixth aspect.

According to an eleventh aspect, a computer program product including instructions is provided. When the computer program product runs on a computer, the computer is enabled to perform the method according to any one of the possible implementations of the first aspect to the sixth aspect.

According to a twelfth aspect, a communication system is provided, including one or more of the terminal device, the first network device, the second network device, and the third network device described above.

According to a thirteenth aspect, a communication device is provided, including a first apparatus and a second apparatus, where the first apparatus is configured to perform the method according to the first aspect, and perform the method according to the fourth aspect or the method according to the fifth aspect. For example, the first apparatus is a DU, and the second apparatus is a CU.

### BRIEF DESCRIPTION OF DRAWINGS

FIG. 1 is a diagram of a system architecture to which an embodiment of this application is applicable;
FIG. 2 is a schematic flowchart of a data transmission method 200 according to an embodiment of this application;
FIG. 3 is a schematic flowchart of a data transmission method 300 according to an embodiment of this application;
FIG. 4 is a schematic flowchart of a data transmission method 400 according to an embodiment of this application;
FIG. 5 is a block diagram of a data transmission apparatus according to an embodiment of this application;
FIG. 6 is a block diagram of another data transmission apparatus according to an embodiment of this application; and
FIG. 7 is a diagram of a chip system according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, an evolved system after 5G such as a 6th generation (6th generation, 6G) system, and a non-terrestrial communication network (non-terrestrial network, NTN) system such as an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario, and have no limitation on a transmission point. Coordinated multipoint transmission may be performed between macro base stations, between micro base stations, and between a macro base station and a micro base station. The technical solutions in embodiments of this application are applicable to the FDD/TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, communication in the internet of vehicles, communication in the internet of things, communication in the industrial internet, and the like.

The technical solutions in embodiments of this application are also applicable to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which a terminal is connected to at least two base stations.

The technical solutions in embodiments of this application are also applicable to a macro-micro scenario including different forms of base stations in a communication network. For example, the base station may be a satellite, an air balloon station, or an uncrewed aerial vehicle station. The technical solutions in embodiments of this application are also applicable to a scenario in which both a wide-coverage base station and a small-coverage base station exist.

It may be further understood that the technical solutions in embodiments of this application may be further applied to 5.5G, 6G, and later wireless communication systems. Application scenarios include but are not limited to scenarios such as ground cellular communication, NTN, satellite communication, high altitude communication platform (high altitude platform station, HAPS) communication, vehicle-to-everything (vehicle-to-everything, V2X), integrated access and backhaul (integrated access and backhaul, IAB), and reconfigurable intelligent surface (reconfigurable intelligent surface, RIS) communication.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a tablet computer, a computer having a wireless transceiver function, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, an apparatus configured to implement a function of the terminal device may be the terminal device, or may be an apparatus that can support the terminal device in implementing the function, for example, a chip system. The apparatus may be mounted in the terminal device or used with the terminal device. In embodiments of this application, the chip system may include a chip, or may include a chip and another discrete component.

The network device in embodiments of this application is a device having a wireless transceiver function, and is configured to communicate with the terminal device. An access network device may be a node in a radio access network (radio access network, RAN), and may be referred to as a base station, or may be referred to as a RAN node; or may be an evolved NodeB (evolved NodeB, eNB, or eNodeB) in LTE, a transmission reception point (transmission receiving point/transmission reception point, TRP), a base station such as a gNodeB (gNB) in a 5G network, a base station in an evolved public land mobile network (public land mobile network, PLMN) after 5G, a broadband network service gateway (broadband network gateway, BNG), an aggregation switch, a 3rd generation partnership project (3rd generation partnership project, 3GPP) access device, or the like.

The network device in embodiments of this application may alternatively be a base station evolved subsequently in 3GPP, an access node in a Wi-Fi system, a wireless relay node, a wireless backhaul node, or the like.

The network device in embodiments of this application may further include various forms of base stations, for example, a macro base station, a micro base station (also referred to as a small cell), a pico base station, a balloon station, a relay station, a transmission point (transmitting and receiving point, TRP), a transmission point (transmitting point, TP), a mobile switching center, and devices that function as base stations in device-to-device (device-to-device, D2D), vehicle-to-everything (vehicle-everything, V2X), and machine-to-machine (machine-to-machine, M2M) communication; and may further include a central unit (central unit, CU) and a distributed unit (distributed unit, DU) in a cloud access network (cloud radio access network, C-RAN) system, and a network device in an NTN communication system. This is not specifically limited in embodiments of this application.

In embodiments of this application, an apparatus configured to implement a function of the network device may be the network device, or may be an apparatus that can support the network device in implementing the function, for example, a chip system. The apparatus may be mounted in the network device or used with the network device. In embodiments of this application, the chip system may include a chip, or may include a chip and another discrete component.

It should be further understood that, a specific structure of an execution body of a method provided in embodiments of this application is not specifically limited in embodiments shown below provided that a program that records code of the method provided in embodiments of this application can be run to perform communication according to the method provided in embodiments of this application. For example, the method provided in embodiments of this application may be performed by the terminal device or the network device, or a functional module that can invoke and execute the program in the terminal device or the network device.

Without a loss of generality, interaction between the network device and the terminal device is used as an example below to describe in detail a data transmission method provided in embodiments of this application.

For ease of understanding of embodiments of this application, several basic concepts in embodiments of this application are briefly described. The basic concepts described below are briefly described by using basic concepts specified in a new generation radio communication system (new radio, NR) protocol as an example, but this is not limited to that embodiments of this application can be applied only to an NR system. Therefore, a standard name that appears when the NR system is used as an example for description is a functional description, and a specific name is not limited. The standard name only represents a function of a device, and may be correspondingly extended to another system, for example, a 2nd generation (2nd generation, 2G), 3rd generation (3rd generation, 3G), 4th generation (4th generation, 4G), 5th generation (5th generation, 5G), or future communication system.

### 1. Server:

The server may also be referred to as a cloud, and is mainly a device providing a computing or application service for an integrity transmission-required service, including a plurality of devices such as a control server and an application server.

### 2. Core network:

The core network mainly includes three functions: registration completion, connection, and session management.

The core network includes an authentication server function (Authentication Server Function, AUSF) network element, a network exposure function (network exposure function, NEF) network element, a policy control function (Policy Control Function, PCF) network element, a unified data management (Unified Data Management, UDM), a unified data repository (Unified Data Repository, UDR), a network repository function (Network Repository Function, NRF) network element, an application function (Application Function, AF) network element, an access and mobility management function (Access and Mobility Management Function, AMF) network element, a session management function module (Session Management Function, SMF) network element, a RAN, a UPF network element, and the like.

The AUSF network element is mainly responsible for performing authentication on a user, to determine whether to allow the user or a device to access a network.

The NEF network element exposes a service and a capability of a 3GPP network function to the AF, and may also enable the AF to provide information for the 3GPP network function.

The PCF network element performs policy management on a charging policy and a QoS policy.

The UDM network element is mainly responsible for functions such as subscription data management and user access authorization.

The UDR network element is mainly responsible for an access function for subscription data, policy data, application data, and the like.

The NRF network element may be configured to provide a network element discovery function, and provide, based on a request of another network element, network element information corresponding to a network element type. The NRF further provides a network element management service such as network element registration, update, and deregistration, network element status subscription and push, and the like.

The AF network element mainly transfers a requirement of an application side on a network side.

The AMF network element mainly performs functions such as mobility management and access authentication/authorization. In addition, the AMF network element is further responsible for transferring a user policy between UE and the PCF.

The SMF network element implements session management functions such as UE IP address allocation, UPF selection, and charging and QoS policy control.

The UPF network element, serving as an interface UPF with a data network, implements functions such as user plane data forwarding, charging statistics at a session/flow level, and bandwidth limiting.

### 3. Packet data convergence protocol (packet data convergence protocol, PDCP)

PDCP is short for the packet data convergence protocol, is a wireless transmission protocol stack in UMTS, and is responsible for compressing and decompressing an IP header, transmitting user data, and maintaining a sequence number of a radio bearer set for a lossless serving radio network subsystem (SRNS).

A radio interface may be divided into three protocol layers: a physical layer (L1 for short), a data link layer (L2 for short), and a network layer (L3 for short).

L1 is mainly used to provide a higher layer service with a wireless physical channel for transmission.

L2 mainly includes a medium access control (medium access control, MAC) layer, a radio link control (radio link control, RLC) layer, and a PDCP layer.

L3 mainly includes mobility management (mobility management, MM) and call control (call control, CC) at an RRC sublayer in an access stratum and a non-access stratum.

It should be understood that the packet data convergence protocol layer belongs to the second layer L2 of the radio interface protocol stack, and processes a radio resource management (RRC) message on a control plane and an internet protocol packet on a user plane. On the user plane, after obtaining an IP data packet from an upper layer, a PDCP sublayer performs header compression and encryption on the IP data packet, and then delivers the IP data packet to an RLC sublayer. The PDCP sublayer further provides a sequential submission function and a duplicate packet detection function for the upper layer. On the control plane, the PDCP sublayer provides a signaling transmission service for the upper layer RRC, implements encryption and consistency protection on RRC signaling, and implements decryption and consistency check on the RRC signaling in an opposite direction.

The PDCP protocol mainly includes the following specific supported functions:
(1) Header compression and decompression of user plane data.
(2) Security function: encryption and decryption of user and control plane protocols; integrity protection and verification of control plane data.
(3) Data transmission function: During lower-layer reestablishment, PDUs sent to the upper layer are sent and reordered in sequence, and lower-layer SDUs of RBs mapped to an AM mode are reordered.
(4) Data packet discarding.

The following describes in detail a data transmission method and apparatus in embodiments of this application with reference to the accompanying drawings.

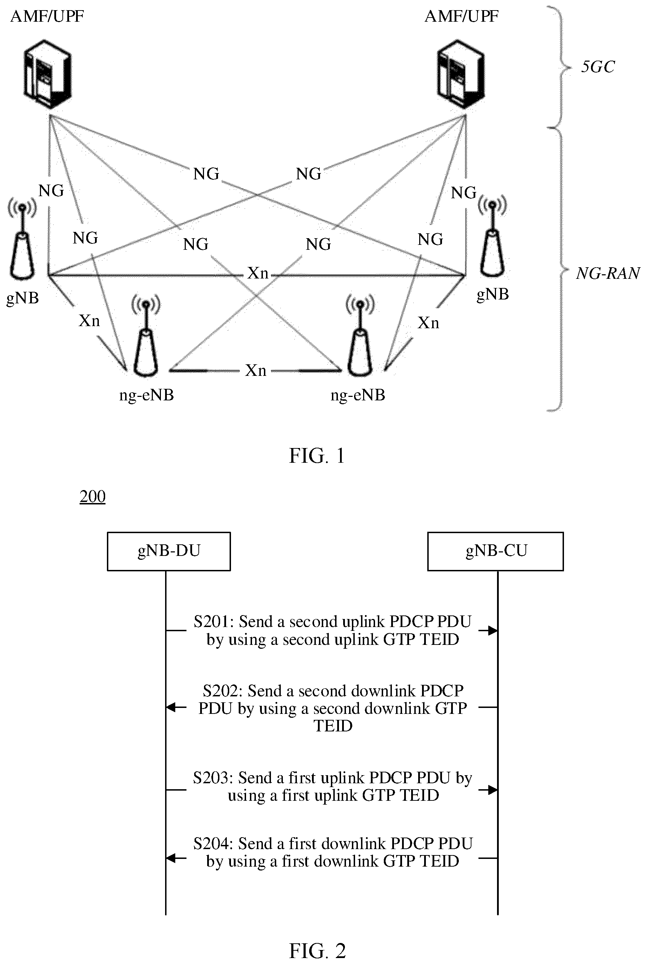

FIG. 1 is a diagram of a system architecture to which an embodiment of this application is applicable. The architecture shown in FIG. 1 is mainly described by using a 5th generation wireless network technology as an example.

A RAN node may include a gNB or an ng-eNB.

It should be understood that the gNB provides a termination point of NR user plane and control plane protocols, and the ng-eNB provides a termination point of E-UTRAN user plane and control plane protocol stacks.

It should be further understood that gNBs are connected through an Xn interface, the gNB is connected to the ng-eNB through an Xn interface, and ng-eNBs are connected through an Xn interface.

With reference to FIG. 1, it can be learned that the gNB and the ng-eNB are separately connected to a 5GC (core network) through an NG interface. Specifically, the gNB and the ng-eNB are separately connected to an AMF through an NG-C interface, and the gNB and the ng-eNB are separately connected to a UPF through an NR-U interface.

The gNB and the ng-eNB are interconnected through the Xn interface. The gNB and the ng-eNB are further connected to the 5GC through the ng interface, and more specifically, connected to the AMF (access and mobility management function) through the ng-C interface, and connected to the UPF (user plane function) through the ng-U interface.

Due to movement of a terminal device, quality of a cell that currently provides a service for the terminal device may become unavailable for communication, and the terminal device needs to switch to a cell with good signal quality for communication. Usually, in an implementation process, before the signal quality of the current serving cell of the terminal device becomes unavailable for communication, the terminal device switches to the cell with good signal quality in advance for communication, to ensure an uninterrupted communication service of the terminal device, and effectively prevent a problem such as a call drop of the terminal device caused by a change of the signal quality of the serving cell.

Currently, L3 switch means that a CU receives a signal measurement result on a cell from a terminal device, the signal measurement result is forwarded by a DU to the CU, and the CU determines, based on the measurement result, whether the terminal device initiates switch. For example, when signal quality of a serving cell is poor, the CU sends a switch command to the DU, and the DU forwards the switch command to the terminal device. Information between the CU and the DU is exchanged through an F1 interface. There is a specific transmission delay in information transmission between the CU and the DU. In a possible implementation, the delay is approximately 3 ms to 10 ms.

To reduce a switch delay, it may be considered that in a process of sending a switch decision of the terminal device from the CU to the DU in lower layer mobility (Lower layer mobility, LTM), an information exchange delay of the F1 interface may be reduced. The DU determines, based on the signal measurement result on the cell from the terminal device, whether the terminal device needs to perform switch, and sends the switch decision to the terminal device. Particularly, in LTM, compared with a small delay of the F1 interface, the DU determines the switch decision of the terminal device and directly sends the switch decision to the terminal device. To further reduce a delay caused by processing of the terminal device, a manner such as no need of radio link (Radio link control, RLC) reestablishment, no need of PDCP reestablishment, or no need of PDCP data recovery in a mobility scenario may be considered.

FIG. 2 is a schematic flowchart of a data transmission method 200 according to an embodiment of this application.

It should be understood that before an intra-DU moves, and a gNB-CU performs PDCP reestablishment or PDCP data recovery, the gNB-CU sends related data to a gNB-DU by using an uplink general packet radio service tunneling protocol tunnel endpoint identifier (uplink general packet radio service Tunneling Protocol Tunnel Endpoint Identifier, UL GTP TEID) (referred to as a second DL GTP TEID in this embodiment of this application). The gNB-DU sends related data to the gNB-CU by using an uplink general packet radio service tunneling protocol tunnel endpoint identifier (uplink general packet radio service Tunneling Protocol Tunnel Endpoint Identifier, UL GTP TEID) (referred to as a second UL GTP TEID in this embodiment of this application). For movement of the intra-DU, the gNB-CU provides a new UL GTP TEID (referred to as a first UL GTP TEID in this embodiment of this application) for the gNB-DU, and the gNB-DU provides a new DL GTP TEID (referred to as a first DL GTP TEID in this embodiment of this application) for the gNB-CU.

The PDCP reestablishment means that data that is not successfully transmitted is retransmitted with changing a key, and the key is used to retransmit the data that is not successfully transmitted and transmit subsequent new data. When a terminal device performs cell switch, a PDCP layer guarantees that AM data is not lost. The gNB-CU reestablishes all PDCP entities, and completes processing of PDCP entity data in the switch by performing a PDCP entity reestablishment-related operation, for example, data re-arrangement and AM data integrity guarantee.

The PDCP data recovery means that data that is not successfully transmitted is retransmitted without changing a key, and an original key continues to be used to retransmit the data that is not successfully transmitted and transmit subsequent new data.

RLC reestablishment means that when the terminal device performs cell switch, RLC resets status variables of all entities, to facilitate status synchronization with a network. The gNB-DU performs RLC reestablishment.

It should be further understood that in this embodiment of this application, a first cell represents a target cell to which the terminal device switches, the first cell belongs to at least one candidate cell, and a second cell represents a source cell of the terminal device. The second cell may be a serving cell present before the terminal device switches to the first cell, or the second cell belongs to the at least one candidate cell, and the first cell and the second cell are not a same cell. The first cell corresponds to the first UL GTP TEID and the first DL GTP TEID, and the second cell corresponds to the second UL GTP TEID and the second DL GTP TEID.

S201: The gNB-DU sends a second uplink PDCP PDU to the gNB-CU by using the second UL GTP TEID.

Correspondingly, the gNB-CU receives the second uplink PDCP PDU sent by the gNB-DU by using the second UL GTP TEID.

It should be understood that before the gNB-DU performs RLC reestablishment, the gNB-DU sends the second uplink PDCP PDU to the gNB-CU by using the second UL GTP TEID.

S202: The gNB-CU sends a second downlink PDCP PDU to the gNB-DU by using the second DL GTP TEID.

Correspondingly, the gNB-DU receives the second downlink PDCP PDU sent by the gNB-CU by using the second DL GTP TEID.

It should be understood that before the gNB-CU performs PDCP reestablishment or PDCP data recovery, the gNB-CU sends the second downlink PDCP PDU to the gNB-DU by using the second DL GTP TEID.

When the terminal device switches from the second cell to the first cell, after the gNB-DU determines that the terminal successfully accesses the target cell, the gNB-DU needs to perform RLC reestablishment; and after the gNB-CU determines that the terminal successfully accesses the target cell, the gNB-CU also needs to perform PDCP reestablishment or PDCP data recovery. After RLC reestablishment is completed, the method shown in FIG. 2 further includes the following step.

S203: The gNB-DU sends a first uplink PDCP PDU to the gNB-CU by using the first UL GTP TEID.

Correspondingly, the gNB-CU receives the first uplink PDCP PDU sent by the gNB-DU by using the first UL GTP TEID.

It should be understood that after the gNB-DU performs RLC reestablishment, the gNB-DU sends the first uplink PDCP PDU to the gNB-CU by using the first UL GTP TEID.

It should be further understood that the second uplink PDCP PDU and the first uplink PDCP PDU are different PDUs.

After the gNB-CU performs PDCP reestablishment or PDCP data recovery, the method shown in FIG. 2 further includes: S204: The gNB-CU sends a first downlink PDCP PDU to the gNB-DU by using the first DL GTP TEID.

Correspondingly, the gNB-DU receives the first downlink PDCP PDU sent by the gNB-CU by using the first DL GTP TEID.

It should be understood that after the gNB-CU performs PDCP reestablishment or PDCP data recovery, the gNB-CU sends the first downlink PDCP PDU to the gNB-DU by using the first DL GTP TEID.

It should be further understood that the second downlink PDCP PDU and the first downlink PDCP PDU are different PDUs.

According to the method shown in FIG. 2, during L1 and L2 movement, to further reduce PDCP and RLC processing delays of the terminal device, when the terminal device and a network device may not have a behavior such as RLC reestablishment, PDCP reestablishment, or PDCP recovery, the method shown in FIG. 2 is no longer applicable.

In an L2 switch scenario, in a process in which the terminal device and the network device do not perform RLC reestablishment, PDCP reestablishment, or PDCP data recovery, how to support data forwarding to identify different data forwarding is needed.

For the foregoing technical problem, embodiments of this application provide a data forwarding method, to describe a technical method in which data forwarding can be supported in the process in which the terminal device and the network device do not perform RLC reestablishment, PDCP reestablishment, or PDCP data recovery.

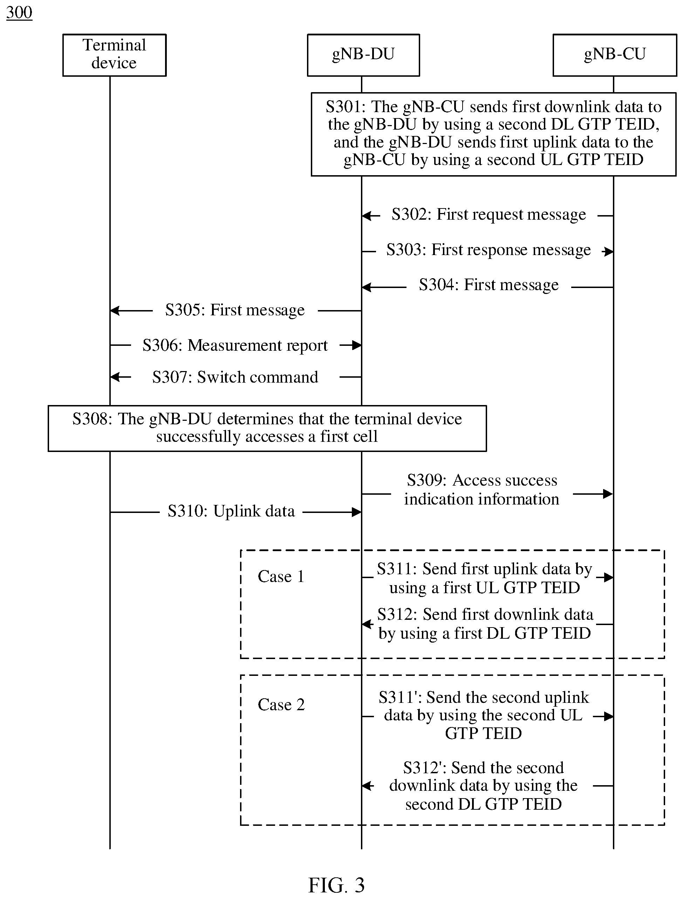

FIG. 3 is a schematic flowchart of a data forwarding method 300 according to an embodiment of this application.

It should be understood that, in the embodiment in FIG. 3, a first cell represents a target cell to which a terminal device switches, the first cell belongs to at least one candidate cell, and a second cell represents a source cell of the terminal device. The second cell may be a serving cell present before the terminal device switches to the first cell, or the second cell belongs to the at least one candidate cell, and the first cell and the second cell are not a same cell. The first cell corresponds to a first UL GTP TEID and a first DL GTP TEID, and the second cell corresponds to a second UL GTP TEID and a second DL GTP TEID.

S301. A gNB-CU sends second downlink data to a gNB-DU by using the second DL GTP TEID, and the gNB-DU sends second uplink data to the gNB-CU by using the second UL GTP TEID.

Correspondingly, the gNB-DU receives the second downlink data sent by the gNB-CU by using the second DL GTP TEID, and the gNB-CU receives the second uplink data sent by the gNB-DU by using the second UL GTP TEID.

It should be understood that the second uplink data and the second downlink data are used for the foregoing data communication performed by the serving cell (referred to as the second cell in this embodiment of this application) of the terminal device. The data communication of the second cell corresponds to the second DL GTP TEID and the second UL GTP TEID.

It should be further understood that, because the terminal device moves, the terminal device switches from the second cell to the first cell, the gNB-CU and the gNB-DU do not need to perform PDCP reestablishment, PDCP data recovery, or RLC reestablishment, and the gNB-CU and the gNB-DU continues to use a PDCP-related parameter and an RLC-related parameter that are related to the second cell.

S302: The gNB-CU sends a first request message to the gNB-DU.

Correspondingly, the gNB-DU receives the first request message from the gNB-CU.

The first request message is used to notify the gNB-DU to initiate preparation for L1/L2 mobility. The L1/L2 mobility may also be referred to as LTM (L1/L2 triggered mobility). The first request message includes the first UL GTP TEID and identification information of the at least one candidate cell corresponding to the first UL GTP TEID.

Optionally, the first request message further includes the identification information of the at least one candidate cell and/or configuration information of the gNB-CU.

The identification information of the at least one candidate cell includes identification information of the first cell, and the configuration information of the gNB-CU includes PDCP configuration information.

The identification information of the first cell may include a cell global identifier (cell global identify, CGI) of the first cell, or the identification information may include identification information of the first cell in the candidate cell.

It should be understood that the gNB-DU determines, based on the identification information of the at least one candidate cell in the first request message, a configuration of the at least one candidate cell and the first DL GTP TEID corresponding to the first cell.

Optionally, the first request message may further include first indication information, the first indication information indicates to release or retain a GTP TEID, and the GTP TEID includes a DL GTP TEID and/or a UL GTP TEID.

In a possible implementation, the GTP TEID includes the second DL GTP TEID and the second UL GTP TEID.

When the first indication information indicates to release or retain the DL GTP TEID and/or the UL GTP TEID, the first indication information may include indication information #1 and indication information #2. The indication information #1 may indicate to release or retain the DL GTP TEID, and the indication information #2 may indicate to release or retain the UL GTP TEID.

The indication information #1 and the indication information #2 may be two different pieces of indication information, or the indication information #1 and the indication information #2 are same indication information. For example, the first indication information may indicate to release or retain the DL GTP TEID, and may also indicate to release or retain the UL GTP TEID. This is not limited in this application.

In a possible implementation, when the first indication information indicates to release the second UL GTP TEID, after the terminal device successfully switches to the first cell, the gNB-CU and the gNB-DU release the second UL GTP TEID based on the first indication information.

In another possible implementation, when the first indication information indicates that subsequent switch is allowed, after the terminal device successfully switches to the first cell, the gNB-CU and the gNB-DU need to continue to retain the second UL GTP TEID and the second DL GTP TEID. Otherwise, the gNB-CU and the gNB-DU release the second UL GTP TEID and the second DL GTP TEID.

In an example, after the terminal device switches from the second cell to the first cell, because the terminal device continues to move, the terminal device switches from the first cell back to the second cell. In this case, a first network device may continue to use the retained second UL GTP TEID and the retained second DL GTP TEID to forward data.

It should be understood that, if the second UL GTP TEID and the second DL GTP TEID are released, the second UL GTP TEID and the second DL GTP TEID are not used to forward data of the terminal device between the gNB-CU and the gNB-DU, but the second UL GTP TEID and the second DL GTP TEID can still forward data of another terminal device.

S303: The gNB-DU sends a first response message to the gNB-CU.

Correspondingly, the gNB-CU receives the first response message from the gNB-DU.

Specifically, after receiving the first request message from the gNB-CU, the gNB-DU sends the first response message to the gNB-CU based on the first request message. The first response message includes the first DL GTP TEID and configuration information of the at least one candidate cell corresponding to the first DL GTP TEID, and the configuration information of the at least one candidate cell is the same as configuration information of the gNB-DU.

S304: The gNB-CU sends a first message to the gNB-DU.

Correspondingly, the gNB-DU receives the first message from the gNB-CU.

The first message includes the configuration information of the at least one candidate cell.

Specifically, after receiving the first response message of the gNB-DU, the gNB-CU determines the first message based on the first response message.

Optionally, the first message may further include configuration identification information of the at least one candidate cell.

S305: The gNB-DU sends the first message to the terminal device.

Correspondingly, the terminal device receives the first message from the gNB-DU.

Specifically, after receiving the first message from the gNB-CU, the gNB-DU sends the first message to the terminal device.

S306: The terminal device sends a measurement report of the first cell to the gNB-DU.

Correspondingly, the gNB-DU receives the measurement report about the first cell from the terminal device.

Specifically, after receiving the first message sent by the gNB-DU, the terminal device measures the first cell based on the configuration information of the at least one candidate cell, and determines the measurement report.

The measurement report may include a measurement result of the terminal device on signal quality of the first cell.

In an example, the measurement report includes a measurement result of the terminal device on a reference signal received power (reference signal received power, RSRP) of the first cell and/or a measurement result of the terminal device on a signal to interference plus noise ratio (signal to interference plus noise ratio, SINR) of the first cell.

S307: The gNB-DU sends a switch command to the terminal device.

Correspondingly, the terminal device receives the switch command from the gNB-DU.

Specifically, after receiving the measurement report from the terminal device, the gNB-DU determines the switch command based on the measurement report, and sends the switch command to the terminal device.

In an example, after receiving the measurement report from the terminal device, the gNB-DU determines, based on the measurement result on the first cell in the measurement report, whether the measurement result meets a first condition, and determines whether to send the switch command to the terminal device. It is assumed that when the measurement result meets the first condition, the gNB-DU sends the switch command to the terminal device; or when the measurement result does not meet the first condition, the gNB-DU does not send the switch command to the terminal device.

The first condition may be a threshold range or another determining condition. The first condition may be specified in a system protocol, or may be agreed upon by a network device and the terminal device, or may be determined by the network device. This is not specifically limited in this application.

It can be learned that the gNB-DU determines the switch command based on the measurement report of the terminal device, but does not need to send the measurement report to the gNB-CU through an F1 interface, for the gNB-CU to determine the switch command. In this way, a delay generated by exchanging information between the gNB-DU and the gNB-CU through the F1 interface is reduced, switch duration of the terminal device is reduced, and user experience is improved.

It should be understood that after the terminal device receives the switch command from the gNB-DU, the terminal device switches a communication service from the second cell to the first cell. The method shown in FIG. 3 further includes the following steps.

S308: The gNB-DU determines that the terminal device successfully accesses the first cell.

After the gNB-DU sends the switch command to the terminal device, the gNB-DU performs access detection of the target cell on the terminal device, and determines whether the terminal device successfully accesses the first cell.

It should be understood that, the terminal device and the network device establish access by using a random access (random access, RA) procedure. After RA is successfully completed, the terminal device and the network device can perform normal data transmission. In this case, it indicates that the terminal device successfully accesses the second cell, that is, the gNB-DU can determine that the terminal device successfully accesses the first cell.

In a possible implementation, the gNB-DU determines, based on the random access procedure, that the terminal device successfully accesses the first cell.

For example, when the terminal device accesses the first cell through 4-step contention-based random access (4-step contention-based random access, 4-step CBRA), the terminal device first sends a random access preamble (preamble) to a gNB, and then the gNB sends random access response information to the terminal device, where the random access response information may indicate a resource location of a physical uplink shared channel (physical uplink shared channel, PUSCH). Then, the terminal device sends, to the gNB through the PUSCH based on the resource location of the PUSCH indicated in the random access response information received from the gNB, request information including a cell identifier of the terminal device. Finally, after the gNB receives the request information of the terminal device, the gNB sends response information (for example, a PDCCH of a C-RNTI) to the terminal device, where the response information may indicate that the terminal device successfully accesses the first cell.

For another example, when the terminal device accesses the second cell by using 2-step contention-free random access (2-step contention-free random access, 2-step CFRA), the terminal device first sends a preamble to a gNB, and then the gNB sends random access response information to the terminal device. In this case, it indicates that the terminal device successfully accesses the first cell.

In another possible implementation, the gNB-DU determines, based on RACH-less, whether the terminal device successfully accesses the first cell. For the RACH-less, after related access success indication information (for example, a C-RNTI) for the terminal device is received, it indicates that the terminal device successfully accesses the first cell.

It should be understood that after the gNB-DU determines that the terminal device successfully accesses the first cell, the gNB-DU does not need to perform RLC reestablishment, and the gNB-DU continues to use data processed by RLC in the second cell. The gNB-CU receives the access success indication information of the gNB-DU, and the gNB-CU determines that the terminal device successfully accesses the first cell. The gNB-CU does not need to perform PDCP reestablishment or PDCP data recovery, and the gNB-CU continues to use data processed by PDCP in the second cell.

S309: The gNB-DU sends the access success indication information to the gNB-CU.

Correspondingly, the gNB-CU receives the access success indication information from the gNB-DU.

Specifically, before the gNB-DU transmits data to the gNB-CU by using the first UL GTP TEID, the gNB-DU sends the access success indication information to the gNB-CU, where the access success indication information indicates that the terminal device successfully accesses the first cell.

S310: The terminal device sends uplink data to the gNB-DU.

Correspondingly, the gNB-DU receives the uplink data from the terminal device.

In a possible implementation, when GTP TEIDs used for the first cell and the second cell are different, that is, the first DL GTP TEID is different from the second DL GTP TEID, as shown in Case 1 in FIG. 3:
S311: The gNB-DU sends first uplink data to the gNB-CU by using the first UL GTP TEID.

Correspondingly, the gNB-CU receives the first uplink data sent by the gNB-DU by using the first UL GTP TEID.

S312: The gNB-CU sends first downlink data to the gNB-DU by using the first DL GTP TEID.

Correspondingly, the gNB-DU receives the first downlink data sent by the gNB-CU by using the first DL GTP TEID.

It should be understood that when the GTP TEIDs used for the first cell and the second cell are different, after the terminal device successfully switches from the second cell to the first cell, the gNB-DU and the gNB-CU perform data transmission by using the first UL GTP TEID and the first DL GTP TEID.

In another possible implementation, when GTP TEIDs used for the first cell and the second cell are the same, as shown in Case 2 in FIG. 3:
S311': The gNB-DU sends the second uplink data to the gNB-CU by using the second UL GTP TEID.

Correspondingly, the gNB-CU receives the uplink data sent by the gNB-DU by using the second UL GTP TEID.

S312': The gNB-CU sends the second downlink data to the gNB-DU by using the second DL GTP TEID.

Correspondingly, the gNB-DU receives the second downlink data sent by the gNB-CU by using the second DL GTP TEID.

It should be understood that when the GTP TEIDs used for the first cell and the second cell are the same, after the terminal device successfully switches from the second cell to the first cell, the gNB-DU and the gNB-CU continue to perform data transmission by using the GTP TEID (that is, the second UL GTP TEID and the second DL GTP TEID) used when the terminal device is in the second cell.

According to the method shown in FIG. 3, in an L1/L2 mobility scenario, the terminal device measures the at least one candidate cell of L1/L2 based on the first message from the gNB-CU, and sends the measurement report to the gNB-DU. The gNB-DU directly determines the switch command based on the measurement report, indicates the terminal device to switch from the second cell to the first cell, and does not need to send the measurement report to the gNB-CU through the F1 interface, to reduce a delay in a switch process. In addition, after it is detected that the terminal device successfully accesses the first cell, the gNB-DU and the gNB-CU determine to use the UL GTP TEID and the DL GTP TEID that correspond to the first cell to perform data transmission, to ensure communication continuity of the terminal device and further improve user experience. In the method shown in FIG. 3, in the L1/L2 mobility scenario, the gNB-DU and the gNB-CU can still forward data without RLC reestablishment, PDCP reestablishment, or PDCP data recovery.

In the method shown in FIG. 3, before step S390, before the gNB-DU determines that the terminal device successfully accesses the first cell, the gNB-DU continues to send the second uplink data (for example, a UL PDCP PDU) to the gNB-CU by using the second UL GTP TEID corresponding to the second cell, and does not send the first uplink data by using the first UL GTP TEID.

It should be understood that after the gNB-DU determines that the terminal device successfully accesses the first cell, when the TEIDs for the first cell and the second cell are different, the gNB-DU sends the first uplink data to the gNB-CU by using the first UL GTP TEID, and does not send the second uplink data to the gNB-CU by using the second UL GTP TEID.

The first uplink data is different from the second uplink data. The second uplink data is data sent by using the second UL GTP TEID before the terminal device successfully accesses the first cell. The first uplink data is data sent by using the first UL GTP TEID after the terminal device successfully accesses the first cell.

It should be further understood that when the gNB-DU sends data to the gNB-CU by using the first UL GTP TEID, the gNB-DU determines whether to release the second UL GTP TEID. The gNB-DU determines, based on the first indication information included in the first request message in step S320, to release or retain the second UL GTP TEID.

In a possible implementation, the first indication information indicates to release the second UL GTP TEID.

For example, after determining that the terminal device successfully accesses the first cell, the gNB-DU and the gNB-CU release the second UL GTP TEID.

In another possible implementation, when the first indication information indicates the gNB-DU to release the second UL GTP TEID, the gNB-DU determines, based on the first indication information and UL end marker indication information, to release the second UL GTP TEID.

For example, the UL end marker indication information indicates that the gNB-DU determines that forwarding of data sent by using the second UL GTP TEID ends (or referred to as forwarding completion). After determining that the terminal device successfully accesses the first cell, the gNB-DU first does not release the second UL GTP TEID. After receiving DL end marker indication information, the gNB-DU determines that forwarding of the data sent by using the second UL GTP TEID is completed, and then the gNB-DU releases the second DL GTP TEID.

For another example, after the gNB-DU determines that the terminal device successfully accesses the first cell, the gNB-DU first determines that the UL end marker indication information is successfully sent, and then releases the second UL GTP TEID. After the gNB-DU determines the data sent by using the second UL GTP TEID, and successfully sends the data to the gNB-CU, the gNB-DU sends the UL end marker indication information to the gNB-CU, and then the gNB-DU releases the second UL GTP TEID. After the gNB-CU receives the UL end marker indication information sent by the gNB-DU, the gNB-CU releases the second UL GTP TEID.

In still another possible implementation, when the first indication information indicates to retain the second UL GTP TEID,
for example, after the terminal device successfully accesses the first cell, the gNB-DU and the gNB-CU retain the second UL GTP TEID.

It should be understood that the gNB-DU and the gNB-CU retain the second UL GTP TEID, so that after the terminal device switches to the second cell in the future, the gNB-DU can continue to forward data (for example, send data to the gNB-CU) by using the second UL GTP TEID.

For example, after the terminal device switches from the second cell to the first cell, the terminal device switches from the first cell to the second cell due to movement of the terminal device. After the terminal device successfully accesses the second cell, the gNB-DU can continue to forward data by using the second UL GTP TEID.

It should be further understood that, when there are a plurality of second UL GTP TEIDs between the gNB-DU and the gNB-CU, each second UL GTP TEID may need respective UL end marker indication information, and the first indication information may indicate each individual second UL GTP TEID, or may jointly indicate all second UL GTP TEIDs.

In the method shown in FIG. 3, before step S390, before the gNB-CU determines that the terminal device successfully accesses the first cell, the gNB-CU continues to send the second downlink data (for example, a DL PDCP PDU) to the gNB-DU by using the second DL GTP TEID corresponding to the second cell, and does not send the first downlink data by using the first DL GTP TEID.

It should be understood that after the gNB-CU determines that the terminal device successfully accesses the first cell, when the TEIDs for the first cell and the second cell are different, the gNB-CU sends the first downlink data to the gNB-DU by using the first DL GTP TEID, and does not send the second downlink data to the gNB-DU by using the second DL GTP TEID.

The first downlink data is different from the second downlink data. The second downlink data is data sent by using the second DL GTP TEID before the terminal device successfully accesses the first cell. The first downlink data is data sent by using the first DL GTP TEID after the terminal device successfully accesses the first cell.

It should be further understood that when the gNB-CU sends the first downlink data to the gNB-DU by using the first DL GTP TEID, the gNB-CU determines whether to release the second DL GTP TEID. The gNB-CU determines, based on the first indication information, to release or retain the second DL GTP TEID.

In a possible implementation, the first indication information indicates to release the second DL GTP TEID.

For example, after determining that the terminal device successfully accesses the first cell, the gNB-DU and the gNB-CU release the second DL GTP TEID.

In another possible implementation, when the first indication information indicates the gNB-DU to release the second UL GTP TEID, the gNB-DU determines, based on the first indication information and UL end marker indication information, to release the second DL GTP TEID.

For example, the UL end marker indication information indicates that the gNB-CU determines that forwarding of data sent by using the second DL GTP TEID ends (or referred to as forwarding completion). After determining that the terminal device successfully accesses the first cell, the gNB-CU first does not release the second DL GTP TEID. After receiving the UL end marker indication information, the gNB-CU determines that forwarding of the data sent by using the second DL GTP TEID is completed, and then the gNB-CU releases the second DL GTP TEID.

For another example, after the gNB-CU determines that the terminal device successfully accesses the first cell, the gNB-CU first determines that DL end marker indication information is successfully sent, and then releases the second DL GTP TEID. After the gNB-CU determines the data sent by using the second DL GTP TEID, and successfully sends the data to the gNB-DU, the gNB-CU sends the DL end marker indication information to the gNB-DU, and then the gNB-CU releases the second DL GTP TEID. After the gNB-DU receives the DL end marker indication information sent by the gNB-CU, the gNB-DU releases the second DL GTP TEID.

In still another possible implementation, when the first indication information indicates to retain the second DL GTP TEID,
for example, after the terminal device successfully accesses the first cell, the gNB-CU and the gNB-DU retain the second DL GTP TEID.

It should be understood that the gNB-CU and the gNB-DU retain the second DL GTP TEID, so that after the terminal device switches to the second cell in the future, the gNB-CU can continue to forward data (for example, send data to the gNB-DU) by using the second DL GTP TEID.

For example, after the terminal device switches from the second cell to the first cell, the terminal device switches from the first cell to the second cell due to movement of the terminal device. After the terminal device successfully accesses the second cell, the gNB-CU can continue to forward data by using the second DL GTP TEID.

It should be further understood that when there are a plurality of second DL GTP TEIDs between the gNB-DU and the gNB-CU, each second DL GTP TEID may need respective DL end marker indication information, and the first indication information may indicate each individual second DL GTP TEID, or may jointly indicate all second DL GTP TEIDs.

It can be learned from the foregoing descriptions that in this application, different data types are distinguished by using different GTP TEIDs, so that resource management of the network device can be better implemented.

The terminal device switches from the second cell to the first cell, and successfully accesses the first cell. Because the terminal device continues to move, according to the method shown in FIG. 3, after steps S301 to S306 are performed, the terminal device, the first network device, and a second network device may further perform the following step:
The first network device receives a measurement report on a third cell from the terminal device, and correspondingly, the terminal device sends the measurement report of the terminal device on the third cell to the first network device.

The third cell belongs to the at least one candidate cell, and the third cell is different from the first cell.

It should be understood that the measurement report on the third cell determined by the terminal device is similar to step S306 shown in FIG. 3. For details, refer to the descriptions in step S306.

The terminal device, the first network device, and the second network device continue to perform the following step AS307 to step AS312. Details are as follows:
AS307: The gNB-DU sends a switch command to the terminal device.

Correspondingly, the terminal device receives the switch command from the gNB-DU.

Specifically, after the terminal device receives the switch command, the terminal device switches from the first cell to the third cell.

A308: The gNB-DU determines that the terminal device successfully accesses the third cell.

After the gNB-DU sends the switch command to the terminal device, the gNB-DU performs access detection of the target cell on the terminal device, and determines whether the terminal device successfully accesses the third cell.

AS309: The gNB-DU sends access success indication information to the gNB-CU.

Correspondingly, the gNB-CU receives the access success indication information from the gNB-DU.

Specifically, before the gNB-DU transmits data to the gNB-CU by using a third UL GTP TEID, the gNB-DU sends the access success indication information to the gNB-CU, where the access success indication information indicates that the terminal device successfully accesses the third cell.

The third cell corresponds to the third UL GTP TEID and a third DL GTP TEID.

AS310: The terminal device sends uplink data to the gNB-DU.

Correspondingly, the gNB-DU receives the uplink data from the terminal device.

Steps AS307 to AS310 are similar to steps S307 to S310 in FIG. 3, and details are not described herein again.

AS311: The gNB-DU sends third uplink data to the gNB-CU by using the third UL GTP TEID.

Correspondingly, the gNB-CU receives the third uplink data sent by the gNB-DU by using the third UL GTP TEID.

It should be understood that the third UL GTP TEID is used to send the third uplink data, and the third DL GTP TEID is used to send third downlink data. The third uplink data is different from the first uplink data, and the third downlink data is different from the first downlink data.

AS312: The gNB-CU sends the third downlink data to the gNB-DU by using the third DL GTP TEID.

Correspondingly, the gNB-DU receives the third downlink data sent by the gNB-CU by using the third DL GTP TEID.

In AS311 and AS312, a detailed process of data transmission between the gNB-CU and the gNB-DU is as follows:
In a possible implementation, when GTP TEIDs used for the first cell and the third cell are different, that is, the first DL GTP TEID is different from the third DL GTP TEID, the gNB-DU sends the third uplink data to the gNB-CU by using the third UL GTP TEID, and the gNB-CU receives the third uplink data sent by the gNB-DU by using the third UL GTP TEID. The gNB-CU sends the third downlink data to the gNB-DU by using the third DL GTP TEID. Correspondingly, the gNB-DU receives the third downlink data sent by the gNB-CU by using the third DL GTP TEID.

In another possible implementation, when GTP TEIDs used for the first cell and the third cell are the same, that is, the first DL GTP TEID is the same as the third DL GTP TEID, the gNB-DU sends the first uplink data to the gNB-CU by using the first UL GTP TEID, and the gNB-CU receives the first uplink data sent by the gNB-DU by using the first UL GTP TEID. The gNB-CU sends the first downlink data to the gNB-DU by using the first DL GTP TEID. Correspondingly, the gNB-DU receives the first downlink data sent by the gNB-CU by using the first DL GTP TEID.

It should be understood that, when the terminal device switches from one cell in the candidate cells to another cell in the candidate cells, as described above, step S370 to step S312 in FIG. 3 may be directly performed.

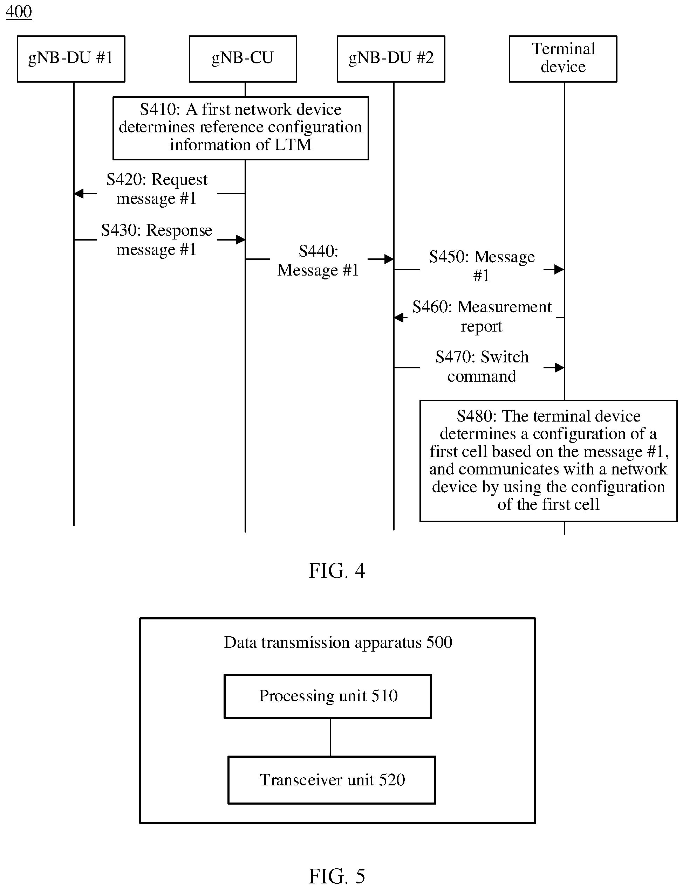

FIG. 4 is a schematic flowchart of a data transmission method 400 according to an embodiment of this application.

It should be understood that in the embodiment in FIG. 4, a first cell represents a target cell to which a terminal device performs LTM cell switch (Cell switch), the first cell belongs to at least one candidate cell of LTM, and a second cell represents a source cell of the terminal device performing LTM cell switch. The second cell may be a serving cell present before the terminal device switches to the first cell, or the second cell belongs to the at least one candidate cell of the LTM, and the first cell and the second cell are not a same cell. A gNB-DU #1 represents at least one candidate gNB-DU of the terminal device, and a gNB-DU #2 represents a source gNB-DU of the terminal device.

S410: A gNB-CU determines reference configuration information of the LTM.

Specifically, the gNB-CU may determine the reference configuration information of the LTM based on a configuration (for example, a physical layer configuration or a MAC layer configuration) of the second cell provided by the gNB-DU #2, or the gNB-CU directly determines the reference configuration information of the LTM.

S420: The gNB-CU sends a request message #1 to the gNB-DU #1.

Correspondingly, the gNB-DU #1 receives the request message #1 from the gNB-CU.

It should be understood that the request message #1 may be terminal device context setup request information UE context setup request.

Specifically, after the gNB-CU determines the reference configuration information of the LTM, the gNB-CU sends the request message #1 to the gNB-DU #1. The request message #1 includes the reference configuration information and identification information of the at least one candidate cell of the LTM.

Optionally, the reference configuration information is a delta configuration used to determine the at least one candidate cell, and may further include a configuration of a primary cell and a configuration of a secondary cell.

S430: The gNB-DU #1 sends a response message #1 to the gNB-CU.

Correspondingly, the gNB-CU receives the response message #1 from the gNB-DU #1.

It should be understood that the response message #1 may be a response message.

Specifically, after receiving the request message #1 from the gNB-CU, the gNB-DU #1 determines the delta (delta) configuration of the at least one candidate cell based on the reference configuration information in the request message #1, includes the configuration in the response message #1, and sends the response message #1 to the gNB-CU.

It should be understood that the response message #1 includes the delta (delta) configuration of the at least one candidate cell. The delta configuration of the at least one candidate cell is a delta (delta) configuration determined based on the reference configuration information. For example, a parameter 1 and a parameter 2 may be included in a reference configuration and a configuration of the candidate cell, and default represents different meanings. One meaning is to continue to use, and the other meaning is to release. In the reference configuration, both the parameter 1 and the parameter 2 appear to explicitly indicate a function. If the parameter 1 and the parameter 2 in the candidate cell are default, when receiving the configuration of the candidate cell, the terminal determines that the default parameter 1 is to continue to use the parameter 1 in the reference configuration and the default parameter 2 is to release the parameter 2 in the reference configuration, and the function corresponding to the parameter 2 is released.

S440: The gNB-CU sends information #1 to the gNB-DU #2.

Correspondingly, the gNB-DU#2 receives the message #1 from the gNB-CU.

It should be understood that the message #1 may be a DL RRC message transfer message.

The message #1 includes the delta configuration of the at least one candidate cell.

Optionally, the message #1 may further include identification information of a reference configuration of the LTM, for example, cell identification information of the second cell.

The identification information of the reference configuration is used by the terminal device to determine, from configuration information of a serving cell, a specific configuration which is the reference configuration of the LTM, where the serving cell does not belong to the at least one candidate cell of the LTM.

Optionally, the message #1 may further include the reference configuration information of the LTM.

S450: The gNB-DU #2 sends the message #1 to the terminal device.

Correspondingly, the terminal device receives the message #1 from the gNB-DU #2.

Specifically, after receiving the message #1 from the gNB-CU, the gNB-DU#2 sends the message #1 to the terminal device.

S460: The terminal device sends a measurement report to the gNB-DU #2.

Correspondingly, the gNB-DU #2 receives the measurement report from the terminal device.

Specifically, after receiving the message #1, the terminal device measures the candidate cell based on the message #1, generates the measurement report on the candidate cell, and sends the measurement report to the gNB-DU #2.

The measurement report may include a measurement result on the at least one candidate cell.

In an example, the measurement result includes a reference signal received power (reference signal received power, RSRP) of the at least one candidate cell and/or a signal to interference plus noise ratio (signal to interference plus noise ratio, SINR) of the at least one candidate cell.

S470: The gNB-DU #2 sends a switch command to the terminal device.

Correspondingly, the terminal device receives the switch command from the gNB-DU #2.

Specifically, after the gNB-DU #2 receives the measurement report from the terminal device, the gNB-DU #2 determines, based on the measurement report, to send the switch command to the terminal device. The switch command instructs the terminal device to perform LTM cell switch (cell switch), that is, to switch to the first cell.

S480: The terminal device determines a configuration of the first cell based on the message #1.

It should be understood that the terminal device may determine the configuration of the first cell based on the delta configuration of the at least one candidate cell and the reference configuration information in the received message #1.

The reference configuration information may be carried in the message #1 and sent to the terminal device, or the reference configuration information is sent to the terminal device before step S410. When the reference configuration information is sent to the terminal device before step S410, the first information includes the identification information of the reference configuration. The terminal device determines, based on the reference configuration information in the first information, to communicate with the network device by using the configuration of the first cell.

According to the method shown in FIG. 4, the gNB-DU and the gNB-CU determine the configuration through negotiation, to determine configuration information of the delta configuration of the candidate cell of the terminal device in the LTM, so that air interface signaling overheads can be reduced and resources can be saved.

The foregoing describes in detail the data transmission method provided in embodiments of this application with reference to FIG. 2 to FIG. 4. The following describes in detail a data transmission apparatus provided in embodiments of this application with reference to FIG. 5 to FIG. 7.

The following describes in detail the data transmission apparatus provided in embodiments of this application in FIG. 5 to FIG. 7. It should be understood that descriptions of apparatus embodiments correspond to the descriptions of the method embodiments. Therefore, for content that is not described in detail, refer to the foregoing method embodiments. For brevity, some content is not described again.

FIG. 5 is a block diagram of a data transmission apparatus according to an embodiment of this application. The apparatus 500 includes a transceiver unit 510 and a processing unit 520. The transceiver unit 510 may be configured to implement a corresponding communication function. The transceiver unit 510 may also be referred to as a communication interface or a communication unit. The processing unit 520 may be configured to implement a corresponding processing function.

Optionally, the apparatus 500 further includes a storage unit. The storage unit may be configured to store instructions and/or data. The processing unit 520 may read the instructions and/or the data in the storage unit, to enable the apparatus to implement actions of a device or a network element in the foregoing method embodiments.

The apparatus 500 may be configured to perform actions performed by the gNB-DU, the gNB-CU, or the terminal device in the foregoing method embodiments. In this case, the apparatus 500 may be a component of the gNB-DU, the gNB-CU, or the terminal device. The transceiver unit 510 is configured to perform receiving and sending-related operations of the gNB-DU, the gNB-CU, or the terminal device in the foregoing method embodiments. The processing unit 520 is configured to perform processing-related operations of the gNB-DU, the gNB-CU, or the terminal device in the foregoing method embodiments.

It should be further understood that the apparatus 500 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 500 may be specifically the gNB-DU, the gNB-CU, or the terminal device in the foregoing embodiments, and may be configured to perform various procedures and/or steps corresponding to the gNB-DU, the gNB-CU, or the terminal device in the foregoing method embodiments; or the apparatus 500 may be specifically the gNB-DU, the gNB-CU, or the terminal device in the foregoing embodiments, and may be configured to perform various procedures and/or steps corresponding to the gNB-DU, the gNB-CU, or the terminal device in the foregoing method embodiments. To avoid repetition, details are not described herein again.

The apparatus 500 in the foregoing solutions has a function of implementing corresponding steps performed by the gNB-DU, the gNB-CU, or the terminal device in the foregoing methods, or the apparatus 500 in the foregoing solutions has a function of implementing corresponding steps performed by the gNB-DU, the gNB-CU, or the terminal device in the foregoing methods. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced with a transmitter, and a receiving unit in the transceiver unit may be replaced with a receiver), and another unit, for example, the processing unit, may be replaced by a processor, to separately perform receiving and sending operations and related processing operations in the method embodiments.

In addition, the transceiver unit 510 may alternatively be a transceiver circuit (which, for example, may include a receiving circuit and a sending circuit), and the processing unit may be a processing circuit.

It should be noted that the apparatus in FIG. 5 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

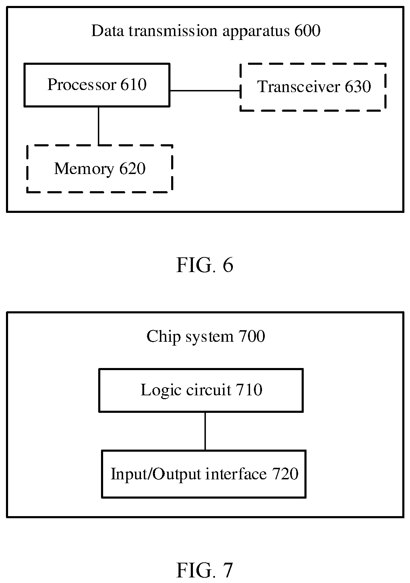

As shown in FIG. 6, an embodiment of this application provides another communication apparatus 600. The apparatus 600 includes a processor 610. The processor 610 is coupled to a memory 620. The memory 620 is configured to store a computer program or instructions and/or data. The processor 610 is configured to execute the computer program or the instructions stored in the memory 620, or read data stored in the memory 620, to perform the method in the foregoing method embodiments.

Optionally, there are one or more processors 610.

Optionally, there are one or more memories 620.

Optionally, the memory 620 and the processor 610 are integrated together, or are disposed separately.

Optionally, as shown in FIG. 6, the apparatus 600 further includes a transceiver 630. The transceiver 630 is configured to receive and/or send a signal. For example, the processor 610 is configured to control the transceiver 630 to receive and/or send the signal.

In a solution, the apparatus 600 is configured to implement operations performed by the gNB-DU, the gNB-CU, or the terminal device in the foregoing method embodiments.

For example, the processor 610 is configured to execute the computer program or the instructions stored in the memory 620, to implement related operations of the first control plane device in the foregoing method embodiments, for example, the method of the gNB-DU in the embodiment shown in FIG. 2 or FIG. 3, or the method of the gNB-CU in the embodiment shown in FIG. 2 or FIG. 3.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) may be integrated into the processor.

It should be further noted that the memory described in this specification is intended to include but is not limited to these memories and any memory of another proper type.

As shown in FIG. 7, an embodiment of this application provides a chip system 700. The chip system 700 (or may be referred to as a processing system) includes a logic circuit 710 and an input/output interface (input/output interface) 720.

The logic circuit 710 may be a processing circuit in the chip system 700. The logic circuit 710 may be coupled to a storage unit, and invoke instructions in the storage unit, so that the chip system 700 can implement the methods and functions in embodiments of this application. The input/output interface 720 may be an input/output circuit in the chip system 700, and outputs information processed by the chip system 700, or inputs to-be-processed data or signaling information to the chip system 700 for processing.

In a solution, the chip system 700 is configured to implement operations performed by the gNB-DU, the gNB-CU, or the terminal device in the foregoing method embodiments.

For example, the logic circuit 710 is configured to implement processing-related operations of the gNB-DU in the foregoing method embodiments, for example, sending and/or receiving-related operations of the gNB-DU in the method embodiments shown in FIG. 2 to FIG. 4, and sending and/or receiving-related operations performed by the gNB-DU in any one of the embodiments shown in FIG. 2 to FIG. 4.

An embodiment of this application further provides a computer-readable storage medium. The computer-readable storage medium stores computer instructions for implementing the method performed by the network element in the foregoing method embodiments.

For example, when a computer program is executed by a computer, the computer is enabled to implement the method performed by the user plane network element in the foregoing method embodiments.

For another example, when a computer program is executed by a computer, the computer is enabled to implement the method performed by the session management network element in the foregoing method embodiments.

For another example, when a computer program is executed by a computer, the computer is enabled to implement the method performed by the edge application server discovery network element in the foregoing method embodiments.

An embodiment of this application further provides a computer program product, including instructions. When the instructions are executed by a computer, the method performed by the network element in the foregoing method embodiments is implemented.

An embodiment of this application further provides a communication system, including one or more of the user plane network element, the session management network element, and the edge application server discovery network element described above.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving, by a first network device, first request information from a second network device, wherein the first request information comprises a first uplink general packet radio service tunneling protocol tunnel endpoint identifier UL GTP TEID and identification information of at least one candidate cell corresponding to the first UL GTP TEID;
sending, by the first network device, first response information to the second network device based on the first request information, wherein the first response information comprises a first downlink general packet radio service tunneling protocol tunnel endpoint identifier DL GTP TEID and configuration information of the at least one candidate cell corresponding to the first DL GTP TEID;
receiving, by the first network device, a first message from the second network device, wherein the first message comprises the configuration information of the at least one candidate cell;
sending, by the first network device, the first message to a terminal device;
sending, by the first network device, a switch command to the terminal device based on a measurement report of a first cell, wherein the switch command instructs the terminal device to switch to the first cell, and the first cell belongs to the at least one candidate cell; and
sending, by the first network device, first data to the second network device by using the first UL GTP TEID, wherein the first data is from the terminal device.

2. The method according to claim 1, wherein before the sending, by the first network device, first data to the second network device by using the first UL GTP TEID, the method further comprises:
determining, by the first network device, that the terminal device successfully accesses the first cell.

3. The method according to claim 1 or 2, wherein the method further comprises:
sending, by the first network device, access success indication information to the second network device, wherein the access success indication information indicates that the terminal device successfully accesses the first cell.

4. The method according to any one of claims 1 to 3, wherein after the determining, by the first network device, that the terminal device successfully accesses the first cell, the method further comprises:
receiving, by the first network device, second data from the second network device by using the first DL GTP TEID.

5. The method according to any one of claims 1 to 4, wherein
the first request information comprises first indication information, the first indication information indicates to release or retain a GTP TEID, and the GTP TEID comprises a UL GTP TEID and/or a DL GTP TEID.

6. The method according to claim 5, wherein after the terminal device successfully switches to the first cell, the method further comprises:
releasing or retaining, by the first network device, a second UL GTP TEID and/or a second DL GTP TEID based on the first indication information, wherein
the second UL GTP TEID and the second DL GTP TEID correspond to a second cell, the second cell is a source cell present before the terminal device switches to the first cell, the GTP TEID comprises the second UL GTP TEID and the second DL GTP TEID, the second UL GTP TEID is different from the first UL GTP TEID, and the second DL GTP TEID is different from the first DL GTP TEID.

7. The method according to claim 6, wherein when the first indication information indicates to release the second UL GTP TEID and/or the second DL GTP TEID, the releasing, by the first network device, the second UL GTP TEID and/or the second DL GTP TEID based on the first indication information comprises:
releasing, by the first network device, the second DL GTP TEID and/or the second UL GTP TEID based on the first indication information and second indication information, wherein
the second indication information indicates a last data packet of the second data, or the second indication information indicates a last data packet of third data, the second data is data transmitted by using the second UL GTP TEID, and the third data is data transmitted by using the second DL GTP TEID.

8. The method according to any one of claims 1 to 7, wherein the first request information further comprises a cell global identifier CGI of the first cell and/or configuration information of the second network device, and
the configuration information of the second network device comprises packet data convergence protocol PDCP configuration information.

9. A data transmission method, comprising:
sending, by a second network device, first request information to a first network device, wherein the first request information comprises a first uplink general packet radio service tunneling protocol tunnel endpoint identifier UL GTP TEID and identification information of at least one candidate cell corresponding to the first UL GTP TEID;
receiving, by the second network device, first response information from the first network device, wherein the first response information comprises a first downlink general packet radio service tunneling protocol tunnel endpoint identifier DL GTP TEID and configuration information of the at least one candidate cell corresponding to the first DL GTP TEID;
sending, by the second network device, a first message to the first network device, wherein the first message comprises the configuration information of the at least one candidate cell; and
receiving, by the second network device, first data from the first network device by using the first UL GTP TEID, wherein the first data is from the terminal device.

10. The method according to claim 9, wherein the method further comprises:
receiving, by the second network device, access success indication information of the first network device, wherein the access success indication information indicates that the terminal device successfully accesses a first cell, and the first cell belongs to the at least one candidate cell.

11. The method according to claim 9 or 10, wherein after the first network device determines that the terminal device successfully accesses the first cell, the method further comprises:
sending, by the second network device, second data to the first network device by using the first DL GTP TEID.

12. The method according to any one of claims 9 to 11, wherein
the first request information comprises first indication information, the first indication information indicates to release or retain a GTP TEID, and the GTP TEID comprises a UL GTP TEID and/or a DL GTP TEID.

13. The method according to claim 12, wherein after the terminal device successfully switches to the first cell, the method further comprises:
releasing or retaining, by the second network device, a second UL GTP TEID and/or a second DL GTP TEID based on the first indication information, wherein
the second UL GTP TEID and the second DL GTP TEID correspond to a second cell, the second cell is a source cell present before the terminal device switches to the first cell, the GTP TEID comprises the second UL GTP TEID and the second DL GTP TEID, the second UL GTP TEID is different from the first UL GTP TEID, and the second DL GTP TEID is different from the first DL GTP TEID.

14. The method according to claim 13, wherein when the first indication information indicates to release the second UL GTP TEID and/or the second DL GTP TEID, the releasing, by the second network device, the second UL GTP TEID and/or the second DL GTP TEID based on the first indication information comprises:
releasing, by the second network device, the second DL GTP TEID and/or the second UL GTP TEID based on the first indication information and second indication information, wherein
the second indication information indicates a last data packet of the second data, or the second indication information indicates a last data packet of third data, the second data is data transmitted by using the second UL GTP TEID, and the third data is data transmitted by using the second DL GTP TEID.

15. The method according to any one of claims 9 to 14, wherein the first request information further comprises a cell global identifier CGI of the first cell and/or configuration information of the second network device, and
the configuration information of the second network device comprises packet data convergence protocol PDCP configuration information.

16. A data transmission apparatus, wherein the apparatus comprises a unit configured to perform the method according to any one of claims 1 to 8, or a unit configured to perform the method according to any one of claims 9 to 15.

17. A data transmission apparatus, comprising a processor and a memory, wherein the processor is configured to execute a computer program stored in the memory, so that the communication apparatus performs the method according to any one of claims 1 to 8, or performs the method according to any one of claims 9 to 15.

18. A computer-readable storage medium, wherein the computer-readable storage medium stores a computer program, and when the computer program is run on a computer, the computer is enabled to perform the method according to any one of claims 1 to 8, or perform the method according to any one of claims 9 to 15.

19. A chip system, comprising a processor, configured to invoke a computer program from a memory and run the computer program, so that an information processing configuration device with the chip system installed performs the method according to any one of claims 1 to 8, or performs the method according to any one of claims 9 to 15.
